# EUROPÄISCHE PATENTSCHRIFT

(11) **EP 3 918 364 B1**
(45) Veröffentlichungstag und Bekanntmachung des Hinweises auf die Patenterteilung: **19.08.2026**
(21) Anmeldenummer: 20701590.0
(22) Anmeldetag: 22.01.2020
(51) Int. Cl.: G01S 7/481, G01S 17/931

(54) **SENDEEINRICHTUNG FÜR EINE OPTISCHE MESSVORRICHTUNG ZUR ERFASSUNG VON OBJEKTEN, LICHTSIGNALUMLENKEINRICHTUNG, MESSVORRICHTUNG UND VERFAHREN ZUM BETREIBEN EINER SENDEEINRICHTUNG**
TRANSMISSION DEVICE FOR AN OPTICAL MEASUREMENT APPARATUS FOR DETECTING OBJECTS, LIGHT SIGNAL DEFLECTION DEVICE, MEASUREMENT APPARATUS AND METHOD FOR OPERATING A TRANSMISSION DEVICE
DISPOSITIF D'ÉMISSION POUR UN DISPOSITIF DE MESURE OPTIQUE DESTINÉ À DÉTECTER DES OBJETS, DISPOSITIF DE DÉFLEXION DE SIGNAUX LUMINEUX, DISPOSITIF DE MESURE ET PROCÉDÉ PERMETTANT DE FAIRE FONCTIONNER UN DISPOSITIF D'ÉMISSION

(30) Priorität: 28.01.2019 DE 102019101968
(43) Veröffentlichungstag der Anmeldung: 08.12.2021
(73) Patentinhaber: Valeo Schalter und Sensoren GmbH, 74321 Bietigheim-Bissingen (DE)
(72) Erfinder: NGUYEN, Ho-Hoai-Duc, 74321 Bietigheim-Bissingen (DE); SCHULER, Thomas, 74321 Bietigheim-Bissingen (DE); HOVORKA, Petr, 10800 Prague (CZ); MÜLLER, Felix, 74321 Bietigheim-Bissingen (DE); HARTMANN, Werner, 74321 Bietigheim-Bissingen (DE); SHROFF, Spandan, 74321 Bietigheim-Bissingen (DE)
(74) Vertreter: Pothmann, Karsten
(86) Internationale Anmeldenummer: PCT/EP2020/051466
(87) Internationale Veröffentlichungsnummer: WO 2020/156895

(56) Entgegenhaltungen:
- EP-A1- 2 492 738
- DE-A1- 102017 116 598
- DE-A1- 102017 201 127
- US-B1- 10 061 019

## Beschreibung

### Technisches Gebiet

Die Erfindung betrifft eine Sendeeinrichtung für eine optische Messvorrichtung zur Erfassung von Objekten in einem Überwachungsbereich,
- mit wenigstens einer Senderlichtquelle zur Aussendung von Lichtsignalen,
- mit wenigstens einer Lichtsignalumlenkeinrichtung zur Umlenkung der Lichtsignale in wenigstens einen Überwachungsbereich der Messvorrichtung, wobei die wenigstens eine Lichtsignalumlenkeinrichtung wenigstens einen Umlenkbereich aufweist, welcher auf die Lichtsignale abhängig von einem Einfall der Lichtsignale richtungsändernd wirken kann,
- und mit wenigstens einer Antriebseinrichtung, mit der ein Einfall der Lichtsignale auf den wenigstens einen Umlenkbereich eingestellt werden kann.

Ferner betrifft die Erfindung eine Lichtsignalumlenkeinrichtung für eine Sendeeinrichtung einer optischen Messvorrichtung zur Erfassung von Objekten in einem Überwachungsbereich, wobei die Lichtsignalumlenkeinrichtung wenigstens einen Umlenkbereich aufweist, welcher auf Lichtsignale der Sendeeinrichtung abhängig von einem Einfall der Lichtsignale richtungsändernd wirken kann.

Außerdem betrifft die Erfindung eine optische Messvorrichtung zur Erfassung von Objekten in einem Überwachungsbereich, mit
- wenigstens einer Sendeeinrichtung zur Sendung von Lichtsignalen in den Überwachungsbereich,
- wenigstens einer Empfangseinrichtung, mit der an etwa im Überwachungsbereich vorhandenen Objekten reflektierte Lichtsignale empfangen werden können,
- und mit wenigstens einer Steuer- und Auswerteeinrichtung, mit der die wenigstens eine Sendeeinrichtung und die wenigstens eine Empfangseinrichtung gesteuert werden können und mit der empfangene Lichtsignale ausgewertet werden können,
- wobei wenigstens eine Sendeeinrichtung aufweist
- wenigstens eine Senderlichtquelle zur Aussendung von Lichtsignalen,
- wenigstens eine Lichtsignalumlenkeinrichtung zur Umlenkung der Lichtsignale in den wenigstens einen Überwachungsbereich, wobei die wenigstens eine Lichtsignalumlenkeinrichtung wenigstens einen Umlenkbereich aufweist, welcher auf die Lichtsignale abhängig von einem Einfall der Lichtsignale richtungsändernd wirken kann,
- und wenigstens eine Antriebseinrichtung, mit der ein Einfall der Lichtsignale auf den wenigstens einen Umlenkbereich eingestellt werden kann.

Des Weiteren betrifft die Erfindung ein Verfahren zum Betreiben einer Sendeeinrichtung einer optischen Messvorrichtung zur Erfassung von Objekten in einem Überwachungsbereich, bei dem mit wenigstens einer Senderlichtquelle Lichtsignale auf wenigstens einen Umlenkbereich wenigstens einer Lichtsignalumlenkeinrichtung gesendet werden, mit dem wenigstens einen Umlenkbereich abhängig von einem Einfall der Lichtsignale eine Richtung der Lichtsignale geändert und die Lichtsignale in den Überwachungsbereich gelenkt werden, wobei ein Einfall der Lichtsignale auf den wenigstens einen Umlenkbereich mit wenigstens einer Antriebseinrichtung eingestellt wird.

### Stand der Technik

Aus der WO 2012/045603 A1 ist eine Umlenkspiegelanordnung für eine optische Messvorrichtung bekannt. Die optische Messvorrichtung umfasst ein Gehäuse mit einer Bodenplatte. Im Gehäuse sind ein Sendefenster, durch das beispielsweise gepulstes Laserlicht abgestrahlt wird, und ein Empfangsfenster eingebracht, durch das von Objekten in einem Überwachungsbereich reflektiertes Laserlicht empfangen wird. Innerhalb des Gehäuses sind eine Sendeeinheit, eine Empfängereinheit sowie eine Umlenkspiegelanordnung angeordnet. Die Umlenkspiegelanordnung umfasst eine Sendespiegeleinheit mit zwei Sendeumlenkspiegeln, welche in einer gemeinsamen horizontalen Ebene radial beabstandet auf einer Trägerplatte angeordnet sind, und eine Empfangsspiegeleinheit mit zwei Empfangsumlenkspiegeln, welche radial beabstandet jeweils an einer Seite eines Trägerkörpers befestigt sind. Die Sendespiegeleinheit und die Empfangsspiegeleinheit sind axial beabstandet zueinander auf einer gemeinsamen drehbaren Achse angeordnet. Eine Antriebseinheit, welche die drehbare Achse antreibt, ist im Wesentlichen im Raum zwischen den beiden Sendeumlenkspiegeln angeordnet. Der feststehende optische Sender erzeugt gepulste Laserstrahlen, welche über die drehbewegliche Sendespiegeleinheit umgelenkt und durch das Sendefenster in den zu überwachenden Bereich abgestrahlt werden.

DE 10 2017 116 598 A1 offenbart eine Sendevorrichtung für ein Detektionssystem, bei dem durch Steuerung der Phase des Sendesignals die Strahlrichtung eines Sendestrahls mittels eines Optical Phased Array in einem Überwachungsbereich geschwenkt werden kann.

DE 10 2017 201 127 A1 offenbart eine optische Anordnung zum Empfangen von Lichtwellen, mit einer Empfangsoptik zum Fokussieren mindestens einer ankommenden Lichtwelle auf eine Fläche eines Detektors. Mindestens ein diffraktives optisches Element mit einer flächigen Ausdehnung ist zwischen der Empfangsoptik und dem Detektor angeordnet.

US 10 061 019 B1 offenbart ein Lidar-System, bei dem Lichtpulse durch ein diffraktives optisches Element abhängig von der Wellenlänge der Lichtpulse in verschiedene Richtungen abgelenkt werden können, um ein Sichtfeld abzutasten.

EP 2 492 738 A1 offenbart einen Laserscanner, bei dem ein Sendelichtstrahl über
eine Ablenkeinheit durch ein Strahlverdrehelement und einen Drehspiegel in einen Überwachungsbereich gelenkt wird. Das Strahlverdrehelement kann als diffraktives optisches Element ausgebildet sein.

Der Erfindung liegt die Aufgabe zugrunde, eine Sendeeinrichtung, eine Lichtsignalumlenkeinrichtung, eine optische Messvorrichtung und ein Verfahren der eingangs genannten Art zu gestalten, bei denen eine Umlenkung der Lichtsignale in den Überwachungsbereich vereinfacht werden kann. Insbesondere soll ein Bauteilaufwand, ein Montageaufwand und/oder ein Justageaufwand vereinfacht werden und/oder eine Zuverlässigkeit, insbesondere Standzeit, verbessert werden. Alternativ oder zusätzlich soll eine Vergrößerung des Sichtfelds und/oder eine Verbesserung der Auflösung erreicht werden.

### Offenbarung der Erfindung

Diese Aufgabe wird erfindungsgemäß mit den Merkmalen der unabhängigen Ansprüche 1, 12 und 13 gelöst. Vorteilhafte Ausgestaltungen davon ergeben sich aus den Unteransprüchen.

Erfindungsgemäß wird wenigstens eine diffraktive Struktur verwendet, um die Lichtsignale zu beugen und damit deren Richtung zu ändern und/oder einzustellen. Diffraktive Strukturen können einfach realisiert und gehandhabt werden. Ein Justageaufwand kann im Vergleich zu bekannten Umlenkspiegeln verringert werden. Die Anforderungen in Bezug auf die Qualität der Lichtsignale können entsprechend gesenkt werden. Ferner können diffraktive Strukturen individuell angepasst werden, um die gewünschte richtungsändernde Wirkung auf die Lichtsignale zu erreichen.

Diffraktive Strukturen sind bekanntermaßen Strukturen, an denen Lichtstrahlen, insbesondere Laserstrahlen, geformt werden können. Dies geschieht als Beugung an optischen Gittern. Dabei können die diffraktiven Strukturen individuell ausgestaltet werden. Sie können so realisiert werden, dass die Strahlrichtung eines einfallenden Lichtstrahls abhängig von dem Einfallswinkel und/oder einer Einfallstelle auf die diffraktive Struktur mit dieser entsprechend geändert wird. Diffraktive Strukturen können in Transmission und/oder Reflexion betrieben werden.

Vorteilhafterweise kann wenigstens ein Umlenkbereich wenigstens eine diffraktive Struktur sein. Auf diese Weise weist der wenigstens eine Umlenkbereich wenigstens eine diffraktive Struktur auf.

Mit der Erfindung kann eine Sendeeinrichtung für eine optische Messvorrichtung mit einer langlebigen und wartungsfreien Lichtsignalumlenkeinrichtung realisiert werden. Ferner kann die Lichtsignalumlenkeinrichtung einfach und kompakt ausgestaltet sein. So kann eine hohe Flexibilität erreicht werden, ohne ein komplexes optisches Design erforderlich ist. Ferner kann mit der erfindungsgemäßen Messvorrichtung ein großer Sichtbereich mit einer großen Auflösung erfasst werden kann. So kann beispielsweise ein Bedarf an großen Linsen auf der Sendeseite oder der Empfängerseite reduziert werden.

Mit der wenigstens einen Antriebseinrichtung wird ein Einfall der Lichtsignale auf den wenigstens einen Umlenkbereich verändert. Der Einfall wird durch den Einfallswinkel und die Einfallstelle, in der das Lichtsignal auf den wenigstens einen Umlenkbereich trifft, charakterisiert. Zur Veränderung des Einfalls wird entweder der Einfallswinkel oder die Einfallstelle oder beides verändert.

Der Einfallswinkel kann vorteilhafterweise mittels rotieren oder schwenken des wenigstens einen Umlenkbereichs relativ zu der Strahlrichtung des einfallenden Lichtsignals verändert werden. Dabei kann entweder der wenigstens eine Umlenkbereich oder die Senderlichtquelle oder beides rotiert oder geschwenkt werden.

Die Einfallstelle kann vorteilhafterweise mittels Verschieben, insbesondere mithilfe einer linearen Verschiebung, des wenigstens einen Umlenkbereichs relativ zur Strahlrichtung des einfallenden Lichtsignals verändert werden. Dabei kann vorteilhafterweise die Verschiebung quer, insbesondere senkrecht, zur Strahlrichtung des einfallenden Lichtsignals durchgeführt werden. Dabei kann entweder der wenigstens eine Umlenkbereich oder die Senderlichtquelle oder beides verschoben werden.

Der Einfall der Lichtsignale auf wenigstens einen Umlenkbereich kann direkt oder indirekt erfolgen. Insbesondere kann ein von der Senderlichtquelle kommendes Lichtsignal indirekt mithilfe wenigstens eines vorgeschalteten optisch wirkenden Elements auf den wenigstens einen Umlenkbereich gelenkt werden. Zusätzlich oder alternativ kann das Lichtsignal mithilfe wenigstens eines in Strahlrichtung betrachtet vorderen Umlenkbereichs auf wenigstens einen hinteren Umlenkbereich gelenkt werden.

Vorteilhafterweise kann wenigstens ein ausgesendetes Lichtsignal als Lichtpuls realisiert sein. Ein Anfang und ein Ende eines Lichtpulses kann bestimmt, insbesondere gemessen, werden. Auf diese Weise können insbesondere Lichtlaufzeiten bestimmt werden.

Vorteilhafterweise kann wenigstens ein Lichtsignal auch weitere Informationen enthalten. So kann ein Lichtsignal insbesondere codiert sein. Auf diese Weise kann es einfacher identifiziert werden und/oder entsprechende Informationen mit sich tragen.

Vorteilhafterweise kann die optische Messvorrichtung nach einem Lichtlaufzeitverfahren, insbesondere einem Lichtimpulslaufzeitverfahren, arbeiten. Nach dem Lichtimpulslaufzeitverfahren arbeitende optische Messvorrichtungen können als Time-of-Flight-(TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Lichtsignals mit der Sendeeinrichtung und dem Empfang des entsprechenden reflektierten Lichtsignals mit einer entsprechenden Empfangseinrichtung der Messvorrichtung gemessen und daraus eine Entfernung zwischen der Messvorrichtung und dem erkannten Objekt ermittelt.

Vorteilhafterweise kann die optische Messvorrichtung als scannendes System ausgestaltet sein. Dabei kann mit Lichtsignalen ein Überwachungsbereich abgetastet, also abgescannt, werden. Dazu können die Strahlrichtungen der entsprechenden Lichtsignale über den Überwachungsbereich sozusagen geschwenkt werden. Hierbei kommt wenigstens eine Lichtsignalumlenkeinrichtung zum Einsatz.

Vorteilhafterweise kann die optische Messvorrichtung als laserbasiertes Entfernungsmesssystem ausgestaltet sein. Das laserbasierte Entfernungsmesssystem kann als Senderlichtquelle wenigstens einen Laser, insbesondere einen Diodenlaser, aufweisen. Mit dem wenigstens einen Laser können insbesondere gepulste Lasersignale als Lichtsignale gesendet werden. Mit dem Laser können Lichtsignale in für das menschliche Auge sichtbaren oder nicht sichtbaren Frequenzbereichen emittiert werden. Entsprechend kann wenigstens eine Empfangseinrichtung einen für die Frequenz des ausgesendeten Lichtes ausgelegten Detektor, insbesondere eine (Lawinen)fotodiode, ein Dioden-Array, ein CCD-Array oder dergleichen, aufweisen. Das laserbasierte Entfernungsmesssystem kann vorteilhafterweise ein Laserscanner sein. Mit einem Laserscanner kann ein Uberwachungsbereich mit insbesondere gepulsten Lasersignalen abgetastet werden.

Die Erfindung kann vorteilhafterweise bei einem Fahrzeug, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung kann auch bei einer stationären Messvorrichtung eingesetzt werden.

Mit der Messvorrichtung können stehende oder bewegte Objekte, insbesondere Fahrzeuge, Personen, Tiere, Hindernisse, Fahrbahnunebenheiten, insbesondere Schlaglöcher oder Steine, Fahrbahnbegrenzungen, Freiräume, insbesondere Parklücken, oder dergleichen, erfasst werden.

Vorteilhafterweise kann die optische Messvorrichtung Teil eines Fahrerassistenzsystems und/oder einer Fahrwerksteuerung eines Fahrzeugs sein oder mit diesen verbunden sein. Die mit der optischen Messvorrichtung ermittelten Informationen können zur Steuerung von Funktionskomponenten des Fahrzeugs herangezogen werden. Mit den Funktionskomponenten können insbesondere Fahrfunktionen, insbesondere eine Lenkung, ein Bremssystem und/oder ein Motor, und/oder Signalisierungseinrichtungen des Fahrzeugs gesteuert werden. So kann bei Erkennung eines Objekts mit der optischen Messvorrichtung das Fahrzeug mit den entsprechenden Funktionskomponenten gelenkt und/oder in seiner Geschwindigkeit geändert, insbesondere gestoppt, werden und/oder wenigstens ein Signal ausgegeben werden.

Bei einer vorteilhaften Ausführungsform kann die wenigstens eine diffraktive Struktur als diffraktives optisches Element ausgestaltet sein. Diffraktive optische Elemente (DoE) können individuell gefertigt und an die entsprechenden Anforderungen angepasst werden. Mit diffraktiven optischen Elementen kann eine gezielte und individuell vorgebbare Änderung, insbesondere Beugung, der Lichtsignale erreicht werden.

Bei einer weiteren vorteilhaften Ausführungsform kann der wenigstens eine Umlenkbereich für die Lichtsignale durchlässig wirken.

Vorteilhafterweise kann die Lichtsignalumlenkeinrichtung auch Umlenkbereiche aufweisen, welche für die Lichtsignale reflektierend wirken.

Alternativ kann die Lichtsignalumlenkeinrichtung sowohl wenigstens einen lichtdurchlässigen Umlenkbereich als auch wenigstens einen reflektierenden Umlenkbereich aufweisen.

Für Lichtsignale durchlässige Umlenkbereiche haben den Vorteil, dass die Lichtquelle auf der dem Überwachungsbereich gegenüberliegenden Seite angeordnet sein kann. Auf diese Weise gibt es keine Zonen, welche durch die Senderlichtquelle verdeckt werden.

Reflektierende Umlenkbereiche haben den Vorteil, dass sie in den rückwärtigen Raum, in dem sich die wenigstens eine Senderlichtquelle befinden kann, strahlen können. So können insbesondere reflektierende Umlenkbereiche eingesetzt werden, wenn der Umlenkbereich als Teil einer Positionserfassungseinrichtung zur Erfassung der Position oder Einstellung der Lichtumlenkeinrichtung verwendet werden soll. In diesem Fall kann das Lichtsignal mit wenigstens einer diffraktiven Struktur des wenigstens einen Umlenkbereichs vorteilhafterweise mit entsprechenden Positionsinformationen codiert werden.

Bei einer weiteren vorteilhaften Ausführungsform kann der wenigstens eine Umlenkbereich in, an und/oder auf wenigstens einem für das Sendelicht durchlässigen Substrat realisiert sein. Mit dem Substrat kann eine mechanische Stabilität erhöht werden. Ferner kann das Substrat als mechanische Halterung dienen. So kann das Substrat insbesondere auf einer entsprechenden Achse montiert sein, um die es gedreht oder geschwenkt werden kann. So kann der Einfall der Lichtsignale auf den wenigstens einen Umlenkbereich verändert, insbesondere eingestellt, werden.

Vorteilhafterweise kann das Substrat aus Glas, Kunststoff oder dergleichen sein, auf das das jeweilige diffraktive optische Element durch Beschichtung oder Abtrag, insbesondere Ätzen oder dergleichen, realisiert werden kann.

Vorteilhafterweise kann wenigstens ein Substrat als Dünnschicht realisiert sein.

Bei einer weiteren vorteilhaften Ausführungsform kann der wenigstens eine Umlenkbereich auf der Lichteintrittsseite eines Substrats angeordnet sein. Erfindungsgemäß ist wenigstens ein Umlenkbereich auf der Lichtaustrittsseite eines Substrats angeordnet.

Mit Umlenkbereichen auf der Lichteintrittsseite kann die entsprechende Beugung der Lichtsignale vor dem Eintritt in das Substrat erfolgen. Das Licht kann so im Substrat auf unterschiedliche Umlenkbereiche, die sich auf der Lichtaustrittsseite des Substrats befinden, gelenkt werden.

Erfindungsgemäß werden mit Umlenkbereichen auf der Lichtaustrittsseite die Lichtsignale unmittelbar in den Überwachungsbereich gelenkt.

Bei einer weiteren vorteilhaften Ausführungsform kann die wenigstens eine Lichtsignalumlenkeinrichtung wenigstens zwei Umlenkbereiche aufweisen, die bezüglich des Strahlengangs der Lichtsignale hintereinander angeordnet sind. Auf diese Weise können abhängig von dem Einfall der Lichtsignale auf einen in Strahlrichtung der Lichtsignale vorderen, ersten Umlenkbereich die Lichtsignale mit dem vorderen Umlenkbereich auf einen hinteren, zweiten Umlenkbereich gelenkt werden. So kann der vordere Umlenkbereich gewissermaßen als Weiche wirken, indem mit ihm die Lichtsignale abhängig vom Einfall der Lichtsignale unterschiedlichen hinteren Umlenkbereichen zugewiesen werden können.

Vorteilhafterweise können die wenigstens zwei Umlenkbereiche schräg hintereinander oder direkt hintereinander oder teilweise überlappend hintereinander angeordnet sein.

Vorteilhafterweise kann wenigstens ein vorderer Umlenkbereich auf einer bezüglich der Strahlrichtung der Lichtsignale vorderen Seite, der Lichteintrittsseite, eines Substrats angeordnet sein. Wenigstens ein hinterer Umlenkbereich ist auf der hinteren Seite, der Lichtaustrittsseite, des Substrats angeordnet.

Vorteilhafterweise können ein vorderer Umlenkbereich und wenigstens zwei hintere Umlenkbereiche vorgesehen sein. Auf diese Weise können die Lichtsignale abhängig von dem Einfall auf den vorderen Umlenkbereich einer der wenigstens zwei hinteren Umlenkbereiche zugewiesen werden. Die hinteren Umlenkbereiche können unterschiedliche Eigenschaften in Bezug auf die Formung der Lichtsignale aufweisen.

Vorteilhafterweise können mit den hinteren Umlenkbereichen unterschiedliche Beugungswinkel für die Lichtsignale realisiert werden. Auf diese Weise kann ein Sichtbereich (Field of View) der Lichtsignalumlenkeinrichtung insgesamt verändert, insbesondere vergrößert, werden. Die Umlenkung der Strahlrichtung der Lichtsignale durch die Lichtsignalumlenkeinrichtung setzt sich dabei zusammen aus einem entsprechenden Einfallswinkel der Lichtsignale auf den vorderen Umlenkbereich und einem entsprechenden individuellen Beugungswinkel, welcher durch den jeweils zugewiesenen hinteren Umlenkbereich erreicht wird. Insgesamt kann bei einem Schwenken oder Drehen der Umlenkbereiche, insbesondere des Substrats, auf dem die Umlenkbereiche angeordnet sind, die Strahlrichtung der Lichtsignale in dem Überwachungsbereich geschwenkt werden kann.

Vorteilhafterweise kann eine Vielzahl von diffraktiven Strukturen auf der Lichtaustrittsseite angeordnet sein. So können entsprechend viele unterschiedliche individuelle Beugungswinkel entlang der Ausdehnung der Umlenkbereiche realisiert werden.

Bei einer weiteren vorteilhaften Ausführungsform kann eine richtungsändernde Eigenschaft des wenigstens einen Umlenkbereichs über seine Ausdehnung in wenigstens einer Ausdehnungsrichtung variieren und/oder die wenigstens eine Lichtsignalumlenkeinrichtung kann wenigstens zwei Umlenkbereiche mit unterschiedlichen richtungsändernden Eigenschaften aufweisen. Mit einem Umlenkbereich, dessen richtungsändernde Eigenschaften über seine Ausdehnung variiert, kann insbesondere kontinuierlich eine Variation der Richtungsänderung der Lichtsignale abhängig vom Einfall realisiert werden.

Alternativ oder zusätzlich kann die wenigstens eine Lichtsignalumlenkeinrichtung wenigstens zwei Umlenkbereiche mit unterschiedlichen richtungsändernden Eigenschaften aufweisen. Auf diese Weise können die wenigstens zwei Umlenkbereiche separat je nach Einfall der Lichtsignale auf diese richtungsändernd wirken.

Vorteilhafterweise können wenigstens zwei Umlenkbereiche lückenlos nebeneinander angeordnet sein.

Bei einer weiteren vorteilhaften Ausführungsform kann die wenigstens eine Senderlichtquelle und/oder der wenigstens eine Umlenkbereich der wenigstens einen Lichtsignalumlenkeinrichtung mit wenigstens einer Antriebseinrichtung bewegbar sein. Auf diese Weise kann mit der wenigstens eine Antriebseinrichtung der Einfall der Lichtsignale auf den wenigstens einen Umlenkbereich eingestellt, insbesondere verändert, werden.

Vorteilhafterweise kann die wenigstens eine Antriebseinrichtung einen rotierenden Antrieb, einen linearen Antrieb oder einen andersartigen Antrieb realisieren. So können entsprechende Rotations- und/oder Verschiebebewegungen der Lichtsignale relativ zu dem wenigstens ein Umlenkbereich durchgeführt werden.

Vorteilhafterweise kann wenigstens eine Antriebseinrichtung wenigstens einen Motor, insbesondere einen Rotationsmotor, einen Linearmotor, einen linearen Gleichstrommotor, einen Schwingspulenmotor, einen Schwingspulenantrieb oder dergleichen, oder einen andersartigen Motor oder Aktor aufweisen. Mit elektrischen Motoren kann einfach ein elektrischer Antrieb realisiert werden. Schwingspulenmotoren können darüber hinaus einfach aufgebaut sein. Sie können einfach gesteuert werden. Ferner sind sie verschleißarm. Außerdem sind Schwingspulenmotoren frei von Bürsten, wodurch die Lebensdauer verlängert und der Wartungsaufwand verringert wird. Ein Schwingspulenmotor kann ohne Umpolung verwendet werden. So kann die Funktionssicherheit erhöht werden.

Schwingspulenmotoren weisen zwei separate Teile auf. Ein magnetisches Gehäuse und eine Spule. Durch das Anlegen einer Spannung wird der Motor in eine Richtung bewegt. Durch Umkehr der elektrischen Spannung wird der Motor in die entgegengesetzte Richtung bewegt. Die erzeugte Kraft ist proportional zu dem elektrischen Strom durch die Spule. Diese Kraft ist in dem spezifizierten Hubbereich des Schwingspulenmotors nahezu konstant.

Vorteilhafterweise kann die Spule des Schwingspulenmotors als Rotor und der Magnet als Stator wirken. Auf diese Weise kann die bewegte Masse verringert werden. Der Rotor benötigt eine Spannungsversorgung.

Alternativ können der Magnet des Schwingspulenmotors als Rotor und die Spule als Stator realisiert werden. Auf diese Weise kann auf eine Spannungsversorgung für den Rotor verzichtet werden. Die entsprechend größere zu bewegende Masse kann reduziert werden durch die Verwendung von Seltenerdmagneten.

Vorteilhafterweise kann wenigstens eine Antriebseinrichtung direkt mit dem wenigstens einen Umlenkbereich, insbesondere wenigstens einem Substrat, auf dem der wenigstens eine Umlenkbereich realisiert ist, verbunden sein. Auf diese Weise kann der wenigstens eine Umlenkbereich schneller beschleunigt und abgebremst werden. So kann die erfindungsgemäße Lichtsignalumlenkeinrichtung verglichen mit einem üblichen rotierenden Spiegel, der mit einem Motor rotierend angetrieben wird, mit höherer Geschwindigkeit und größerer Lebensdauer betrieben werden.

Vorteilhafterweise kann der wenigstens eine Umlenkbereich, insbesondere das Substrat, auf dem der wenigstens eine Umlenkbereich realisiert ist, rotierend oder schwingend angetrieben werden. Vorteilhafterweise kann ein Rotationswinkel der wenigstens einen Antriebseinrichtung begrenzt werden. Auf diese Weise kann die Umlenkung der Lichtsignale auf den gewünschten Sichtbereich eingestellt werden.

Vorteilhafterweise kann für die Sendeeinrichtung und eine Empfangseinrichtung der optischen Messvorrichtung dieselbe Antriebseinrichtung verwendet werden. Auf diese Weise kann der Aufwand an Antriebseinrichtungen verringert werden.

Vorteilhafterweise kann die Lichtsignalumlenkeinrichtung der Sendeeinrichtung mit einer entsprechenden Lichtsignalumlenkeinrichtung der Empfangseinrichtung mechanisch gekoppelt sein. Auf diese Weise können die beiden Lichtsignalumlenkeinrichtung gemeinsam angetrieben werden.

Vorteilhafterweise können Lichtsignalumlenkeinrichtung der Empfangseinrichtung wenigstens einen Umlenkbereich in Form einer diffraktiven Struktur aufweisen.

Vorteilhafterweise kann der wenigstens eine Umlenkbereich der Sendeeinrichtung und der wenigstens eine Umlenkbereich der Empfangseinrichtung auf einem gemeinsamen Substrat realisiert sein. Auf diese Weise können die Umlenkbereiche gemeinsam hergestellt werden. Außerdem können die Umlenkbereiche einfach mithilfe des Substrats und einer entsprechenden Antriebseinrichtung bewegt werden.

Vorteilhafterweise kann die wenigstens eine Senderlichtquelle mithilfe eines Linearantriebs parallel zu wenigstens einem Umlenkbereich verschoben werden. Auf diese Weise können Einfallstellen der Lichtsignale auf den wenigstens einen Umlenkbereich verändert werden.

Bei einer weiteren vorteilhaften Ausführungsform kann der wenigstens eine Umlenkbereich drehbar und/oder schwenkbar und/oder verschiebbar angeordnet sein und/oder die wenigstens eine Senderlichtquelle kann verschiebbar und/oder drehbar und/oder schwenkbar angeordnet sein. Auf diese Weise kann durch entsprechendes Bewegen des wenigstens einen Umlenkbereichs relativ zur Senderlichtquelle der Einfall der Lichtsignale auf den wenigstens einen Umlenkbereich verändert werden.

Vorteilhafterweise kann der wenigstens eine Umlenkbereich, insbesondere ein Substrat, auf dem der wenigstens eine Umlenkbereich angeordnet ist, und/oder die wenigstens eine Senderlichtquelle wenigstens eine Dreh- und/oder Schwenkachse aufweisen. Auf diese Weise kann der Einfall in einer Raumdimension geändert werden. Alternativ oder zusätzlich kann wenigstens ein Umlenkbereich, insbesondere einem Substrat, auf dem der wenigstens ein Umlenkbereich angeordnet ist, und/oder wenigstens eine Senderlichtquelle wenigstens zwei Dreh- oder Schwenkachsen aufweisen. Auf diese Weise kann ein entsprechendes Drehen oder Schwenken in zwei Dimensionen erfolgen. Entsprechend kann der Überwachungsbereich in zwei Dimensionen abgetastet werden. Vorteilhafterweise können die wenigstens zwei Dreh- oder Schwenkachsen senkrecht zueinander verlaufen. Auf diese Weise kann eine effiziente zweidimensionale Abtastung realisiert werden.

Bei einer weiteren vorteilhaften Ausführungsform kann die wenigstens eine Senderlichtquelle wenigstens einen Laser aufweisen. Mit einem Laser können gezielt Lichtpulse ausgesendet werden. So kann eine Entfernung eines erfassten Objekts zu der Messvorrichtung mithilfe eines Lichtlaufzeitverfahrens ermittelt werden. Die wenigstens eine Senderlichtquelle kann aus wenigstens einem Laser bestehen. Alternativ kann wenigstens einen Laserteil der wenigstens einen Sendlichtquelle sein.

Vorteilhafterweise kann wenigstens eine Senderlichtquelle wenigstens einen Oberflächenemitter (VCSEL), einen Kantenemitter, einen Faserlaser, einen Diodenlaser oder einen andersartigen Laser, insbesondere Halbleiterlaser, aufweisen. Derartige Senderlichtquellen können einfach und kompakt realisiert werden.

Vorteilhafterweise kann die Sendeeinrichtung mehr als eine Senderlichtquelle aufweisen. Auf diese Weise können mehrere Umlenkbereiche gleichzeitig oder zeitversetzt mit entsprechenden Lichtsignalen angestrahlt werden. So können gleichzeitig mehrere Lichtsignale in unterschiedliche Teile des Überwachungsbereichs gesendet werden. Eine Bildrate beim Abtasten des Überwachungsbereichs kann so vergrößert werden. Insgesamt kann der Überwachungsbereich so schneller abgetastet werden. Ferner kann durch die Kombination von mehreren Senderlichtquellen mit mehreren Umlenkbereichen der Sichtbereich der Messvorrichtung vergrößert werden.

Vorteilhafterweise kann die wenigstens eine Senderlichtquelle auf einem Halter einer linearen Verschiebeeinrichtung angeordnet sein. Auf diese Weise kann die Senderlichtquelle mit der Verschiebeeinrichtung verschoben werden und so entsprechend die Einfallsstelle der Lichtsignale auf den wenigstens einen Umlenkbereich verschoben werden.

Bei einer weiteren vorteilhaften Ausführungsform kann die Sendeeinrichtung wenigstens ein optisches System aufweisen, welches zwischen der wenigstens einen Senderlichtquelle und dem wenigstens einen Umlenkbereich angeordnet ist. Mit dem optischen System können die Lichtsignale entsprechend geformt, insbesondere fokussiert und/oder aufgeweitet, werden.

Vorteilhafterweise kann das wenigstens eine optische Systems so ausgestaltet sein, dass mit ihm die Lichtsignale in einer Raumrichtung aufgeweitet, insbesondere aufgefächert, werden. Auf diese Weise kann eine entsprechend größere Abschnitt des wenigstens einen Umlenkbereichs in dieser Raumrichtung ausgeleuchtet werden. So kann der Sichtbereich der Messvorrichtung in dieser Richtung aufgeweitet werden. Zusätzlich können die aufgeweiteten Lichtsignale wenigstens einen weiteren Umlenkbereich, welcher in dieser Raumrichtung betrachtet neben dem zum Schwenken der Strahlrichtung der Lichtsignale verwendeten wenigstens einen Umlenkbereich angeordnet sein kann, anstrahlen. Dieser weitere Umlenkbereich kann ein Positionsbereich einer Positionserfassungseinrichtung sein, mit der die Position, insbesondere Schwenkposition, des wenigstens einen Umlenkbereichs ermittelt werden kann. Auf diese Weise kann mit nur einer Senderlichtquelle sowohl der Überwachungsbereich abgetastet werden als auch die Position, insbesondere Schwenkposition, des wenigstens einen Umlenkbereichs bestimmt werden.

Alternativ oder zusätzlich kann das wenigstens eine optische Systems so ausgestaltet sein, dass mit ihm die Lichtsignale in einer Raumrichtung fokussiert werden können. Auf diese Weise kann die Auflösung der Messvorrichtungen in dieser Raumrichtung verbessert werden
Vorteilhafterweise kann die Raumrichtung, in der die Lichtsignale aufgeweitet werden, parallel zu einer Achse sein, um die der wenigstens eine Umlenkbereich geschwenkt oder rotiert werden kann. Auf diese Weise kann der Überwachungsbereich in der Raumrichtung senkrecht zu der Achse mithilfe der Lichtsignalumlenkeinrichtung abgetastet werden.

Vorteilhafterweise kann wenigstens ein optisches System wenigstens eine optische Linse aufweisen. Mit einer optischen Linse können die Lichtsignale geformt werden.

Ferner wird die Aufgabe erfindungsgemäß bei der Lichtsignalumlenkeinrichtung dadurch gelöst, dass wenigstens ein Umlenkbereich wenigstens eine diffraktive Struktur aufweist.

Erfindungsgemäß werden die Lichtsignale mit der wenigstens einen diffraktiven Struktur gebeugt. So kann eine Strahlrichtung der Lichtsignale einfach und genau geändert werden.

Außerdem wird die Aufgabe erfindungsgemäß bei der optischen Messvorrichtung dadurch gelöst, dass wenigstens ein Umlenkbereich der wenigstens einen Sendeeinrichtung wenigstens eine diffraktive Struktur aufweist.

Vorteilhafterweise kann die wenigstens eine Sendeeinrichtung als erfindungsgemäße Sendeeinrichtung ausgestaltet sein.

Vorteilhafterweise kann der wenigstens eine Empfänger wenigstens eine Lichtsignalumlenkeinrichtung aufweisen. Die wenigstens eine Lichtsignalumlenkeinrichtung auf der Empfängerseite kann nach dem gleichen Prinzip wie die wenigstens eine Lichtsignalumlenkeinrichtung auf der Senderseite, insbesondere die erfindungsgemäße Sendeeinrichtung, aufgebaut sein und/oder wirken.

Vorteilhafterweise kann die wenigstens eine Lichtsignalumlenkeinrichtung auf der Empfängerseite wenigstens einen Umlenkbereich mit wenigstens einer diffraktiven Struktur aufweisen.

Vorteilhafterweise kann die wenigstens eine Lichtsignalumlenkeinrichtung, insbesondere der wenigstens eine Umlenkbereich, aufseiten des Empfängers, mechanisch mit der wenigstens einen Lichtsignalumlenkeinrichtung auf der Senderseite gekoppelt sein. Auf diese Weise können die entsprechenden Umlenkbereiche gemeinsam eingestellt, insbesondere gesteuert, werden.

Alternativ kann die wenigstens eine Lichtsignalumlenkeinrichtung auf der Empfängerseite getrennt von der wenigstens einen Lichtsignalumlenkeinrichtung auf der Senderseite betrieben werden. Die wenigstens eine Lichtsignalumlenkeinrichtung auf der Empfängerseite kann auch nach einem anderen Prinzip arbeiten, als die wenigstens eine Lichtsignalumlenkeinrichtung auf der Senderseite.

Des Weiteren wird die Aufgabe erfindungsgemäß bei dem Verfahren dadurch gelöst, dass die Richtung der Lichtsignale mithilfe wenigstens einer diffraktiven Struktur eingestellt wird.

Erfindungsgemäß wird wenigstens eine diffraktive Struktur eingesetzt, um die Strahlrichtung der Lichtsignale einzustellen.

Bei einer vorteilhaften Ausgestaltung des Verfahrens können der wenigstens Umlenkbereich und wenigstens eine Senderlichtquelle relativ zueinander bewegt werden, um den Einfall der Lichtsignale auf den wenigstens einen Umlenkbereich zu verändern. Auf diese Weise kann je nach vorgegebener Eigenschaft der wenigstens einen diffraktiven Struktur eine entsprechende Richtungsänderung der Strahlrichtung des Lichtsignals erreicht werden.

Im Übrigen gelten die im Zusammenhang mit der erfindungsgemäßen Sendeeinrichtung, der erfindungsgemäßen Lichtsignalumlenkeinrichtung, der erfindungsgemäßen Messvorrichtung und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Vorderansicht eines Fahrzeugs mit einer optischen Messvorrichtung, welche mit einem Fahrerassistenzsystem verbunden ist;
- Figur 2: eine optische Messvorrichtung gemäß einem ersten Ausführungsbeispiel mit einem Fahrerassistenzsystem, welche in dem Fahrzeug aus der Figur 1 verwendet werden können;
- Figur 3: eine Lichtumlenkeinrichtung einer Sendeeinrichtung der Messvorrichtung aus der Figur 2 in einer Ansicht in Richtung einer Achse, mit der die Lichtsignalumlenkeinrichtung geschwenkt werden kann;
- Figuren 4 und 5: eine Sendeeinrichtung einer optischen Messvorrichtung gemäß einem zweiten Ausführungsbeispiel, welche zwei Senderlichtquellen aufweist, wobei die Lichtumlenkeinrichtung in zwei unterschiedlichen Schwenkpositionen dargestellt ist;
- Figur 6: eine Sendeeinrichtung einer optischen Messvorrichtung gemäß einem dritten Ausführungsbeispiel, wobei die Senderlichtquelle linear verschiebbar ist;
- Figuren 7 bis 9: eine Lichtsignalumlenkeinrichtung einer optischen Messvorrichtung gemäß einem vierten Ausführungsbeispiel in drei unterschiedlichen Schwenkpositionen.

In den Figuren sind gleiche Bauteile mit gleichen Bezugszeichen versehen.

### Ausführungsform(en) der Erfindung

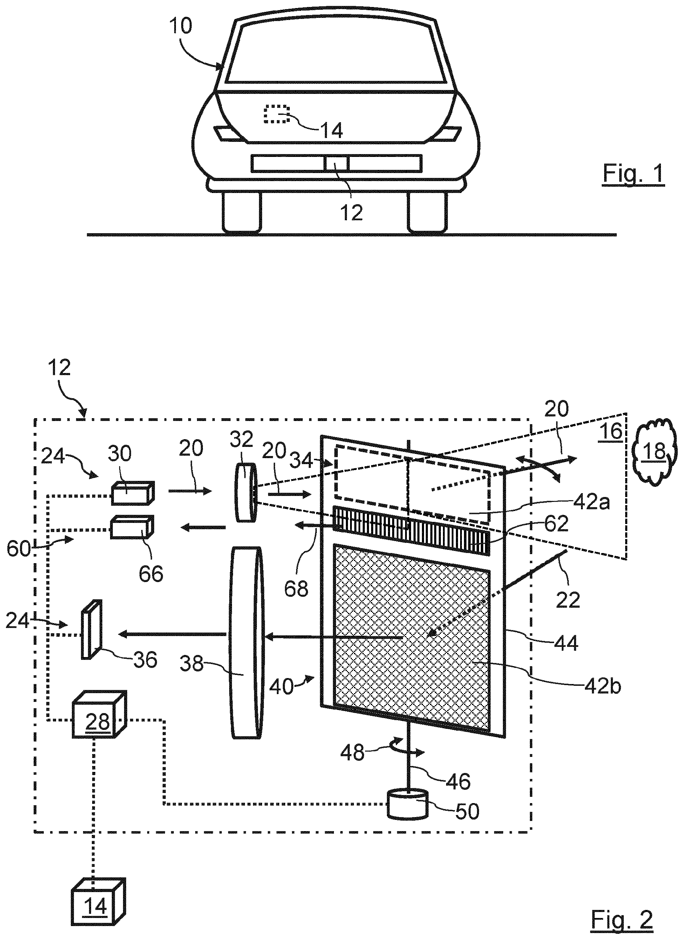

In der Figur 1 ist ein Fahrzeug 10, beispielsweise ein Personenkraftwagen, in der Vorderansicht gezeigt. Das Fahrzeug 10 verfügt über eine optische Messvorrichtung 12, beispielsweise einen Laserscanner. Die optische Messvorrichtung 12 ist beispielsweise in einer vorderen Stoßstange des Fahrzeugs 10 angeordnet. Ferner verfügt das Fahrzeug 10 über ein Fahrerassistenzsystem 14, mit dem das Fahrzeug 10 autonom oder teilautonom betrieben werden kann. Die optische Messvorrichtung 12 ist funktional mit dem Fahrerassistenzsystem 14 verbunden, so dass Informationen, welche mit der Messvorrichtung 12 erlangt werden können, an das Fahrerassistenzsystem 14 übermittelt werden können. Mit der Messvorrichtung 12 kann ein Überwachungsbereich 16, in dem gezeigten Ausführungsbeispiel, in Fahrtrichtung vor dem Kraftfahrzeug 10, auf Objekte 18 überwacht werden.

Die Messvorrichtung 12 arbeitet nach einem Lichtlaufzeitverfahren. Hierzu werden Lichtsignale 20, beispielsweise in Form von Laserpulsen, in den Überwachungsbereich 16 gesendet. An einem etwaigen Objekt 18 reflektierte Lichtsignale 22 werden von der Messvorrichtung 12 empfangen. Aus einer Laufzeit zwischen dem Aussenden der Lichtsignale 20 und dem Empfang der reflektierten Lichtsignale 22 wird eine Entfernung des Objekts 18 zu der Messvorrichtung 12 ermittelt. Die Strahlrichtung der Lichtsignale 20 wird während der Messungen über den Überwachungsbereich 16 geschwenkt. Auf diese Weise wird der Überwachungsbereich 16 abgetastet. Aus der Strahlrichtung der Lichtsignale 20, welche an dem Objekt 18 reflektiert werden, wird eine Richtung des Objekts 18 relativ zu der Messvorrichtung 12 ermittelt.

Die Messvorrichtung 12 umfasst eine Sendeeinrichtung 24, eine Empfangseinrichtung 26 und eine elektronische Steuer- und Auswerteeinrichtung 28.

Die Sendeeinrichtung 24, welche beispielhaft in der Figur 2 gezeigt ist, umfasst eine Sendelichtquelle 30, ein optisches System in Form einer Sendelinse 32 und eine Sender-Lichtsignalumlenkeinrichtung 34.

Die Empfangseinrichtung 26 umfasst einen optischen Empfänger 36, eine Empfängerlinse 38 und eine Empfänger-Lichtsignalumlenkeinrichtung 40.

Die Senderlichtquelle 30 weist beispielsweise einen Laser auf. Mit der Sendlichtquelle 30 können gepulste Lasersignale als Lichtsignale 20 erzeugt werden.

Mit der Senderlinse 32 können die Lichtsignale 20 in einer Richtung quer zu ihrer Strahlrichtung aufgeweitet werden. Dies in der Figur 2 durch ein gestricheltes Trapez angedeutet. Bei dem gezeigten Ausführungsbeispiel werden die Lichtsignale mit der Senderlinse 32 in Richtung einer Achse 46, beispielhaft in vertikaler Richtung, aufgeweitet.

Die Sender-Lichtsignalumlenkeinrichtung 34 befindet sich im Strahlengang der Senderlichtquelle 30 hinter der Senderlinse 32. Mithilfe der Sender-Lichtsignalumlenkeinrichtung 34 kann die Strahlrichtung der Lichtsignale 20 in einer Ebene geschwenkt werden. Beispielsweise verläuft die Schwenkebene senkrecht zu der Richtung, in der die Lichtsignale 20 mit der Senderlinse 32 aufgeweitet werden, beispielhaft also horizontal. Auf diese Weise kann der Überwachungsbereich 16 mit nacheinander folgenden Lichtsignalen 20 in horizontaler Richtung abgetastet werden.

Mit der Empfänger-Lichtsignalumlenkeinrichtung 40 werden aus dem Uberwachungsbereich 16 reflektierte Lichtsignale 22 auf die Empfängerlinse 38 umgelenkt. Mit der Empfängerlinse 38 werden die reflektierten Lichtsignale 22 auf den Empfänger 36 abgebildet.

Der Empfänger 36 ist beispielsweise als CCD-Chip, Array, Fotodiode oder andersartiger Detektor zum Empfang der reflektierten Lichtsignale 22 in Form von Laserpulsen ausgestaltet. Mit dem Empfänger 36 werden die empfangenen Lichtsignale 22 in elektronische Signale umgewandelt. Die elektronischen Signale werden der Steuer- und Auswerteeinrichtung 28 übermittelt.

Mit der Steuer- und Auswerteeinrichtung 28 werden die Sendeeinrichtung 24 und die Empfangseinrichtung 26 gesteuert. Ferner werden mit der Steuer- und Auswerteeinrichtungen 28 die aus den empfangenen Lichtsignale 22 gewonnenen elektronischen Signale ausgewertet. Mit der Steuer- und Auswerteeinrichtungen 28 wird die Lichtlaufzeit und daraus die Entfernung des Objekts 18, an dem die Lichtsignale 22 reflektiert wurden, ermittelt. Außerdem wird mit der Steuer- und Auswerteeinrichtungen 28 die Richtung des Objekts 18 ermittelt.

Die Sender-Lichtumlenkeinrichtung 24 umfasst beispielhaft einen Sender-Umlenkbereich 42a in Form einer diffraktiven Struktur. Die diffraktive optische Struktur ist beispielsweise als sogenanntes diffraktives optisches Element realisiert. Der Sender-Umlenkbereich 42a beispielhaft auf einem rechteckigen, flachen Substrat 44 realisiert. Das Substrat 44 ist beispielsweise eine Glasplatte oder Kunststoffplatte, auch als Dünnfilm, welche für die Lichtsignale 20 durchlässig ist. Der Sender-Umlenkbereich 42a ist auf der Seite des Substrats 44 angeordnet, die der Sendelinse 32 abgewandt ist. Der Sender-Umlenkbereich 42a erstreckt sich als Streifen nahezu über die gesamte Breite des Substrats 44 quer zur Achse 46.

Das Substrat 44 ist auf der Achse 46 befestigt. Die Achse 46 ihrerseits wird mit einem Motor 50 angetrieben, sodass das Substrat 44 und mit diesem der Umlenkbereich 42a um die Achse 46 hin und her geschwenkt wird. Die Schwenkrichtung des Substrats 44 und des damit des Umlenkbereich 42a ist in der Figur 2 durch einen Doppelpfeil 48 angedeutet.

Der Motor 50 ist beispielsweise eine Schwingspulenmotor. Der Motor 50 ist steuerbar mit der Steuer- und Auswerteeinrichtung 28 verbunden. Statt eines Schwingspulenmotors kann allerdings auch eine andersartiger Antriebseinrichtung als Motor 50 vorgesehen sein.

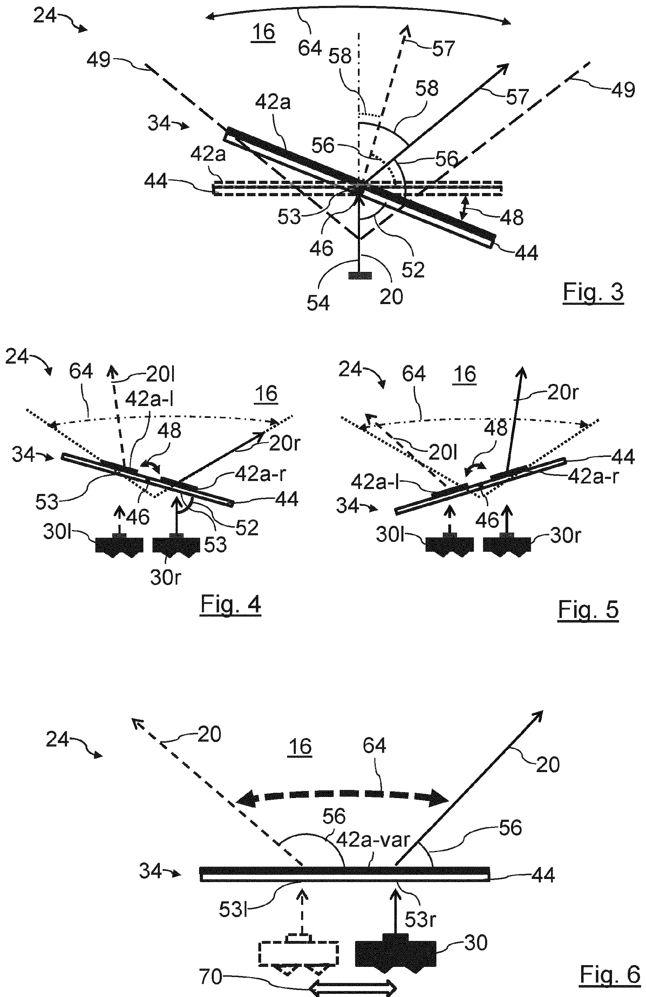

Der Sender-Umlenkbereich 42a befindet sich, wie auch in der Figur 3 gezeigt ist, im Strahlengang der Lichtsignale 20 der Sendeeinrichtung 24. Die Lichtsignale 20 werden abhängig von ihrem Einfall auf den Umlenkbereich 42a gebeugt. Der Einfall ist definiert durch einen Einfallswinkel 52 und eine Einfallstelle 53. Der Einfallswinkel 52 ist der Winkel zwischen einer Einfallstrahlrichtung 54 der Lichtsignale 20 und der Eintrittsfläche des Sender-Umlenkbereichs 42a.

Die diffraktive Struktur des Sender-Umlenkbereichs 42a ist beispielsweise so ausgestaltet, dass ein Beugungswinkel 56 auf der Austrittsseite relativ zur Austrittsfläche des Umlenkbereichs 42a unabhängig von dem Einfallswinkel 52 konstant ist. Ein Ablenkungswinkel 58 zwischen der Einfallstrahlrichtung 54 und der Austrittsstrahlrichtung 57 der umgelenkten Lichtsignale 20 setzt sich zusammen aus dem Einfallswinkel 52 und dem konstanten Beugungswinkel 56. Um den Ablenkungswinkel 58 zu verändern wird der Sender-Umlenkbereich 42 um die Achse 46 geschwenkt, was lediglich zur Veränderung des Einfallswinkel 52 führt. Durch das Schwenken des Sender-Umlenkbereichs 42a wird so die Austrittsstrahlrichtung 57 der Lichtsignale 20 im Überwachungsbereich 16 geschwenkt. Mithilfe des schwenkbaren Sender-Umlenkbereichs 42a kann ein Sichtbereich 64, welcher den Überwachungsbereich 16 definiert, abgetastet werden. Die Sichtbereichsgrenzen 49 des Sichtbereichs 64 sind in der Figur 3 mit gestrichenen Linien angedeutet.

Die Empfänger-Lichtsignalumlenkeinrichtung 40 umfasst wie in der Figur 2 gezeigt, einen Empfänger-Umlenkbereich 42b. Der Empfänger-Umlenkbereich 42b ist eine diffraktive Struktur, beispielsweise ein diffraktives optisches Element.

Bei dem gezeigten Ausführungsbeispiel ist der Empfänger-Umlenkbereich 42b auf demselben Substrat 44 realisiert, auf dem auch der Sender-Umlenkbereich 42a realisiert ist. Der Empfänger-Umlenkbereich 42b ist auf der Seite des Substrats 44 angeordnet, welche der Empfängerlinse 38 zugewandt ist. Der Empfänger-Umlenkbereich 42b erstreckt sich nahezu über die gesamte Breite des Substrats 44 quer zur Achse 46. Die Ausdehnung des Empfänger-Umlenkbereich 42b in Richtung der Achse 46 ist größer als die entsprechende Ausdehnung des Sender-Umlenkbereichs 42a.

In dem gezeigten Ausführungsbeispiel sind die Sende-Lichtumlenkeinrichtung 34 und die Empfänger-Lichtsignalumlenkeinrichtung 40 mithilfe des gemeinsamen Substrats 44 mechanisch gekoppelt. So können der Sende-Umlenkbereich 42a und der Empfänger-Umlenkbereich 42b gemeinsam mit der Achse 46 geschwenkt werden. Hierfür ist nur ein einziger Motor 50 erforderlich.

Bei einem nicht gezeigten alternativen Ausführungsbeispiel können der Sender-Umlenkbereich 42a und der Empfänger-Umlenkbereich 42b getrennt voneinander, beispielsweise auf getrennten Substraten realisiert sein. Die getrennten Substrate können mechanisch, beispielsweise auf einer gemeinsamen Achse, miteinander verbunden sein und gemeinsam angetrieben werden. Der Sender-Umlenkbereich 42a und der Empfänger-Umlenkbereich 42b können auch mechanisch voneinander getrennt sein. In diesem Fall umfasst die Sendeeinrichtung wenigstens einen Sender-Umlenkbereich 42a und eine eigene Antriebseinrichtung. Ebenso umfasst die Empfangseinrichtung wenigstens einen Empfänger-Umlenkbereich 42b und eine eigene Antriebseinrichtung.

Der Empfänger-Umlenkbereich 42b ist so ausgestaltet, dass mit ihm reflektierte Lichtsignale 22, welche aus dem Überwachungsbereich 16 kommen, in jeder Schwenkposition des Empfänger-Umlenkbereichs 42b, respektive des Substrats 44, auf die Empfängerlinse 38 gelenkt werden. Mit der Empfängerlinse 38 werden die umgelenkten reflektierten Lichtsignale 22 auf dem Empfänger 36 fokussiert.

Die die Messvorrichtung 12 weist darüber hinaus eine Positionserfassungseinrichtung 60 auf. Mit der Positionserfassungseinrichtung 60 kann eine Schwenkposition des Substrats 44 und damit der Sender-Lichtumlenkeinrichtung 34 und der Empfänger-Lichtsignalumlenkeinrichtungen 40 ermittelt werden.

Die Positionserfassungseinrichtung 60 umfasst einen Positionsbereich 62 in Form einer diffraktiven Struktur, beispielsweise einem diffraktiven optischen Element, und einen optischen Positionsdetektor 66.

Der Positionsbereich 62 ist auf der Seite des Substrats 44 angeordnet, welche der Sendlichtquelle 30 zugewandt ist. Der Positionsbereich 62 befindet sich in Richtung der Achse 46 betrachtet beispielhaft zwischen dem Sender-Umlenkbereich 42a und dem Empfänger-Umlenkbereich 42b. Der Positionsbereich 62 erstreckt sich als Streifen beispielhaft senkrecht zur Achse 46 nahezu über die gesamte Breite des Substrats 44. Der Positionsbereich 62 ist nah genug an dem Sender-Umlenkbereich 42 angeordnet, dass ein Teil des mit der Senderlinse 32 aufgefächerten Lichtsignals 20, wie in der Figur 2 gezeigt, auf dem Positionsbereich 62 fällt.

Die diffraktive Struktur des Positionsbereich 62 ist so ausgestaltet, dass Lichtsignale 20, welche auf dem Positionsbereich 62 treffen, abhängig von dem Einfallswinkel 52 der Lichtsignale 20 auf dem Positionsbereich 62 codiert werden. Die Codierung charakterisiert dabei den jeweiligen Einfallswinkel 52. Bei dem gezeigten Ausführungsbeispiel werden die Lichtsignale 20 codiert und als Positions-Lichtsignale 68 reflektiert und zu dem Positionsdetektor 66 gesendet.

Der Positionsdetektor 66 ist beispielhaft auf gleicher Höhe neben der Senderlichtquelle 30 angeordnet. Der Positionsdetektor 66 kann beispielsweise als Einzeldetektor, Zeilendetektor oder Flächendetektor ausgestaltet sein. Hierfür kann beispielsweise ein CCD-Chip, eine Fotodiode oder dergleichen verwendet werden.

Die codierten Lichtsignale 68 werden mit dem Positionsdetektor 66 in elektrische Positionssignale umgewandelt und an die Steuer- und Auswerteeinrichtungen 28 übermittelt. Mit der Steuer- und Auswerteeinrichtungen 28 wird aus den elektrischen Positionssignale die Schwenkauslenkung des Positionsbereich 62 und damit die Schwenkauslenkung des Substrats 44, des Sender-Umlenkbereichs 42a und des Empfänger-Umlenkbereichs 42b ermittelt. So kann mithilfe der Erfassungseinrichtung 60 eine Schwenkposition der Sender-Lichtumlenkeinrichtung 34 und der Empfänger-Lichtsignalumlenkeinrichtung 40 ermittelt werden.

Bei einem nicht gezeigten Ausführungsbeispiel kann der Positionsbereich 62 statt zur Reflexion der Lichtsignale zur Transmission ausgestaltet sein. In diesem Fall befindet sich der Positionsdetektor 66 auf der der Senderlichtquelle 30 gegenüberliegenden Seite des Positionsbereich 62.

Beim Betrieb der Messvorrichtung 12 werden mit der Sendelichtquelle 30 gepulste Lichtsignale 20 durch die Sendelinse 32 auf den Sendeumlenkbereich 42a und den Positionsbereich 62 gesendet.

Mit dem Sender-Umlenkbereich 42a werden die Lichtsignale 20 abhängig von der Schwenkstellung des Substrats 44, also abhängig vom Einfallswinkel 52, in den Überwachungsbereich 16 gesendet. Die an dem Objekt 18 reflektierten Lichtsignale 22 werden mit dem Empfänger-Umlenkbereich 42 auf die Empfängerlinse 38 gelenkt. Mit der Empfängerlinse 38 werden die reflektierten Lichtsignale 22 auf den Empfänger 36 fokussiert. Mit dem Empfänger 36 werden die reflektierten Lichtsignale 22 in elektrische Signale umgewandelt und an die Steuer- und Auswerteeinrichtung 28 übermittelt. Mit der Steuer- und Auswerteeinrichtungen 28 wird die Laufzeit der Lichtsignale 20 und der entsprechenden reflektierten Lichtsignale 22 ermittelt und daraus eine Entfernung des erfassten Objekts 18 zu der Messvorrichtung 12 bestimmt.

Ferner wird mit dem Positionsbereich 62 der auf diesen treffende Anteil der Lichtsignale 20 codiert und als Positions-Lichtsignale 68 zu dem Positionsdetektor 66 gesendet. Aus den Positions-Lichtsignalen 68 wird die Schwenkposition der Sender Lichtsignalumlenkeinrichtung 34 und der Empfänger-Lichtsignalumlenkeinrichtungen 40 bestimmt. Aus der Schwenkposition wird die Richtung des erfassten Objekts 18 relativ zur Messvorrichtung 12 ermittelt.

Während der Messung wird mit dem Motor 50 die Achse 46 gedreht und damit das Substrat 44 hin und her geschwenkt. Auf diese Weise erfahren nacheinander ausgesendete gepulste Lichtsignale 20 unterschiedliche Ablenkungen in den Überwachungsbereich 16. So wird der Überwachungsbereich 16 mit den gepulsten Lichtsignale 20 abgescannt.

In den Figuren 4 und 5 ist eine Sendeeinrichtung 24 gemäß einem zweiten Ausführungsbeispiel gezeigt, wobei die Sender-Lichtsignalumlenkeinrichtung 34 in zwei unterschiedlichen Schwenkpositionen dargestellt ist. Diejenigen Elemente, die zu denen des ersten Ausführungsbeispiel aus den Figuren 2 und 3 ähnlich sind, sind mit denselben Bezugszeichen versehen. Im Unterschied zum ersten Ausführungsbeispiel weist die Sendeeinrichtung 24 des zweiten Ausführungsbeispiels zwei Sendelichtquellen 30, nämlich eine in den Figuren 4 und 5 linken Senderlichtquelle 30I und eine rechte Senderlichtquelle 30r, auf.

Darüber hinaus weist die Sender-Lichtumlenkeinrichtung 34 des zweiten Ausführungsbeispiels zwei Sender-Umlenkbereiche 42a, nämlich einen in den Figuren 4 linken Sender-Umlenkbereich 42a-I und einen rechten Sender-Umlenkbereich 42a-r, auf. Die beiden Sender-Umlenkbereiche 42a-I und 42a-r sind entsprechend der beiden Senderlichtquellen 30 nebeneinander angeordnet. So strahlt jede der Senderlichtquellen 30 einen der Sender-Umlenkbereiche 42a-I oder 42a-r an.

Die beiden Sender-Umlenkbereiche 42a-I und 42a-r haben unterschiedliche Ablenkeigenschaften für Lichtsignale 20, respektive für die Lichtsignale 20I der linken Senderlichtquelle 30I und die Lichtsignale 20r der rechten Senderlichtquelle 30r. Einfallende Lichtsignale 20r werden mit dem rechten Sender-Umlenkbereich 42a-r bezüglich einer Senkrechten auf die Oberfläche der Sender-Umlenkbereichs 42a-r nach rechts abgelenkt. Lichtsignale 20I, die auf den linken Sender-Umlenkbereich 42a-r treffen, werden bezüglich der Senkrechten auf die Oberfläche der Sender-Umlenkbereichs 42a-I nach links abgelenkt. Auf diese Weise wird der Sichtbereich 64 der Messvorrichtung 12 und damit der Überwachungsbereich 16 im Vergleich zu nur einem Sender-Umlenkbereich 42a erweitert.

Durch das Schwenken des Substrats 44 und damit der Sender-Umlenkbereiche 42a-I und 42a-r um die Achse 46 wird die Strahlrichtung der Lichtsignale 20I und 20r der beiden Sendelichtquellen 30I und 30r jeweils über den Überwachungsbereich 40 geschwenkt. In der Figur 4 ist die Sender-Lichtsignalumlenkeinrichtung 34 in einer maximalen Schwenkposition nach rechts gezeigt. Figur 5 zeigt die Sender-Lichtsignalumlenkeinrichtung 34 in einer maximalen Schwenkposition nach links.

Die Sendelichtquellen 30I und 30r werden beispielhaft gleichzeitig betrieben. So werden simultan zwei Abschnitte des Überwachungsbereichs 16 gleichzeitig abgetastet. Alternativ können die Sendelichtquellen 30I und 30r abwechselnd betrieben werden.

In der Figur 6 ist eine Sende-Lichtumlenkeinrichtung 34 gemäß einem dritten Ausführungsbeispiel gezeigt. Diejenigen Elemente, die zu denen des ersten Ausführungsbeispiel aus den Figuren 2 und 3 ähnlich sind, sind mit denselben Bezugszeichen versehen. Im Unterschied zu dem ersten Ausführungsbeispiel ist beim dritten Ausführungsbeispiel das Substrat 44 nicht schwenkbar. Stattdessen ist die Sendelichtquelle 30 mithilfe eines nicht gezeigten Linearmotors in einer Verschieberichtung 70 parallel zur Oberfläche des Substrats 44 und damit parallel zu einem Sender-Umlenkbereich 42a-var linear verschiebbar.

Der Sender-Umlenkbereich 42a-var ist eine diffraktive Struktur, beispielsweise ein diffraktives optisches Element, dessen richtungsändernden Eigenschaften in Bezug auf die Lichtsignale 20 in der Verschieberichtung 70 des Linearmotors variieren. So nimmt beispielsweise der Beugungswinkel 56 zwischen der Strahlrichtung der gebeugten Lichtsignale 20 und der Oberfläche des Sender-Umlenkbereichs 42a-var in der Figur 6 von rechts nach links beispielsweise kontinuierlich zu. Lichtsignale 20, die in der in der Figur 6 rechten Position der Senderlichtquelle 30 in einer rechten Einfallstelle 53r auf den Sender-Umlenkbereich 42a-var treffen, werden nach rechts abgelenkt. In der in der Figur 6 linken Position der Senderlichtquelle 30, welche gestrichelt angedeutet ist, werden die Lichtsignale 20, die auf eine linke Einfallstelle 53I treffen, nach links abgelenkt.

Alternativ kann statt eines einzigen Sender-Umlenkbereichs 42a-var mit variierendem Beugungswinkel 56 auch eine Mehrzahl von einzelnen Sender-Umlenkbereichen 42a mit unterschiedlichen Beugungswinkeln 56 nebeneinander angeordnet sein.

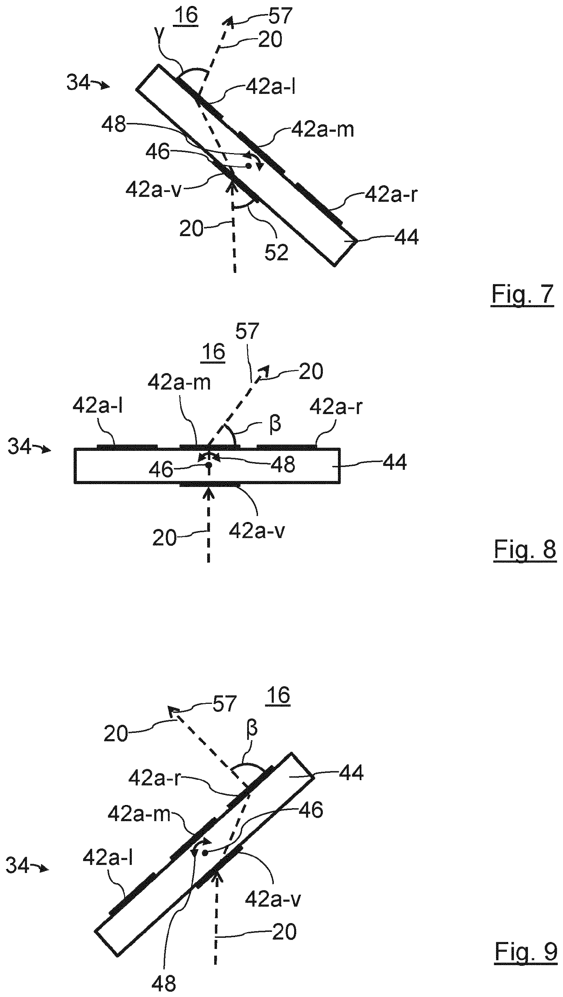

In den Figuren 7 bis 9 ist eine Sende-Lichtsignalumlenkeinrichtung 34 gemäß einem vierten Ausführungsbeispiel in unterschiedlichen Schwenkpositionen gezeigt. Diejenigen Elemente, die zu denen des ersten Ausführungsbeispiel aus den Figuren 2 und 3 ähnlich sind, sind mit denselben Bezugszeichen versehen. Die Sende-Lichtsignalumlenkeinrichtung 34 weist bei dem vierten Ausführungsbeispiel im Unterschied zu dem ersten Ausführungsbeispiel auf der der Sendelinse 32 abgewandten Seite beispielhaft drei Sender-Umlenkbereiche 42a, nämlich einen in den Figuren 7 bis 9 linken Sender-Umlenkbereich 42a-I, einen mittleren Sender-Umlenkbereich 42a-m und einen rechten Sender-Umlenkbereich 42a-r, auf.

Die Sender-Umlenkbereiche 42a haben unterschiedliche richtungsändernde Eigenschaften bezüglich der Lichtsignale 20. Beispielhaft lenkt der in den Figuren 7 bis 9 rechte Sender-Umlenkbereich 42a-r die Lichtsignale 20 mit einem fixen Beugungswinkel α bezogen auf die Oberfläche des Sender-Umlenkbereich 42a-r, wie in der Figur 9 gezeigt, nur gering ab. Der in den Figuren 7 bis 9 mittlere Sender-Umlenkbereich 42a-m lenkt Lichtsignale 20 mit einem fixen Beugungswinkel β bezogen auf die Oberfläche des Sender-Umlenkbereichs 42a-m, wie in der Figur 8 gezeigt, nach rechts ab. Der in den Figuren 7 bis 9 linke Sender-Umlenkbereich 42a-I lenkt Lichtsignale 20 mit einem fixen Beugungswinkel γ bezogen die Oberfläche des Sender-Umlenkbereichs 43a, wie in der Figur 7 gezeigt, nach links ab.

Ferner ist auf der Seite des Substrats 44, die der Senderlichtquelle 30 zugewandt ist, ein weiterer Sender-Umlenkbereich 42a, nämlich ein in Strahlrichtung der Lichtsignale 20 betrachtet vorderer Sender-Umlenkbereich 42a-v, angeordnet. Der vordere Sender-Umlenkbereich 42c ist eine diffraktive Struktur, insbesondere eine diffraktives optisches Element. Der vordere Sender-Umlenkbereich 42a-v befindet sich vor der Achse 46 im Zentrum des Substrats 44. Auf diese Weise wird der vordere Sender-Umlenkbereich 42a-v von Lichtsignalen 20 getroffen, welche auf die Achse 46 gerichtet sind.

Der vordere Sender-Umlenkbereich 42a-v ist so ausgestaltet, dass er abhängig von dem Einfallswinkel 52 der in Einfallstrahlrichtung 54 einfallenden Lichtsignale 20, also abhängig von der Schwenkposition der Sender-Lichtsignalumlenkeinrichtung 34, die Lichtsignale 20 auf eine der drei hinteren Sender-Umlenkbereiche 42a-I, 42a-m oder 42a-r lenkt.

In der Figur 7 ist die Sende-Lichtumlenkeinrichtung 34 in ihrer maximalen rechten Schwenkposition gezeigt. In dieser Schwenkposition werden die einfallenden Lichtsignale 20 mit dem vorderen Sender-Umlenkbereich 42a-v nach links auf den linken Sender-Umlenkbereich 42a-I gelenkt. Die Lichtsignale 20 werden mit dem linken Sender-Umlenkbereich 42a-I mit dem Beugungswinkel γ nach links umgelenkt. Insgesamt wird so die Austrittsstrahlrichtung 57 der Lichtsignale 20 im Bereich des Zentrums des Überwachungsbereichs 16 geschwenkt.

Durch schwenken des Substrats 44 nach links werden die Austrittsstrahlrichtung 57 so lange weiter nach links geschwenkt, bis die mit dem vorderen Sender-Umlenkbereich 42a-v gebeugten einfallenden Lichtsignale 20 den linken Sender-Umlenkbereich 42a-I verlassen und stattdessen auf den mittleren Sender-Umlenkbereich 42a-m treffen.

Mit dem mittleren Sender-Umlenkbereich 42a-m werden die Lichtsignale 20 in der in der Figur 8 gezeigten mittleren Schwenkposition auf die rechte Seite des Überwachungsbereichs 16 gelenkt.

Durch schwenken des Substrats 44 nach links wird die Austrittsstrahlrichtung 57 so lange weiter nach links geschwenkt, bis die mit dem vorderen Sender-Umlenkbereich 42a-v gebeugten einfallenden Lichtsignale 20 den mittleren Sender-Umlenkbereich 42a-m verlassen und stattdessen auf den rechten Sender-Umlenkbereich 42a-r treffen.

Mit dem rechten Sender-Umlenkbereich 42a-r werden die Lichtsignale 20 in den linken Bereich der Überwachungsbereich 16 gelenkt. Beim Weiterschwenken die Sender-Lichtsignalumlenkeinrichtung 34 nach links tasten die Lichtsignale 20 den linken Bereich des Überwachungsbereichs 16 ab, bis die Sender-Lichtsignalumlenkeinrichtung 34 ihre in der Figur 9 gezeigte linke Schwenkposition erreicht. In der linken Schwenkposition werden die Lichtsignale 20 auf die linke Seite des Überwachungsbereichs 16 gelenkt.

Anschließend wird die Schwenkrichtung der Sender-Lichtsignalumlenkeinrichtung 34 umgekehrt, sodass nacheinander mit den mittleren Sender-Umlenkbereich 42a-m und dem linken Sender-Umlenkbereich 42a-I zuerst der rechte Bereich des Überwachungsbereichs 16 und anschließend der mittlere Bereich des Überwachungsbereichs 16 mit den Lichtsignalen 20 abgetastet wird.

Mithilfe der unterschiedlichen Beugungswinkel α, β, γ der drei Sender-Umlenkbereiche 42a, nämlich 42a-I, 42a-m und 42a-r, wird in Kombination mit dem Schwenkwinkel der Sender-Lichtsignalumlenkeinrichtung 34 um die Achse ein entsprechend größerer Sichtbereich 64 abgeschwenkt als dies mit nur einem Sender-Umlenkbereich 42a aus dem ersten Ausführungsbeispiel möglich ist.

Bei weiteren, nicht gezeigten Ausführungsbeispielen können die Merkmale der unterschiedlichen Sender-Lichtsignalumlenkeinrichtung 34, wie sie in den Figuren 2 bis 9 gezeigt sind, zweckmäßig auch für unterschiedliche Empfänger-Lichtsignalumlenkeinrichtungen 40 eingesetzt werden. Insbesondere können Empfänger-Umlenkbereiche ähnlich wie die beschriebenen Sender-Umlenkbereiche realisiert sein.

## Patentansprüche

1. Sendeeinrichtung (24) für eine optische Messvorrichtung (12) zur Erfassung von Objekten (18) in einem Überwachungsbereich (16),
- mit wenigstens einer Senderlichtquelle (30) zur Aussendung von Lichtsignalen (20),
- mit wenigstens einer Lichtsignalumlenkeinrichtung (34) zur Umlenkung der Lichtsignale (20) in wenigstens einen Überwachungsbereich (16) der Messvorrichtung (12), wobei die wenigstens eine Lichtsignalumlenkeinrichtung (34) wenigstens einen Umlenkbereich (42a) aufweist, welcher auf die Lichtsignale (20) abhängig von einem Einfallswinkel (52) und/oder einer Einfallstelle (53) der Lichtsignale (20) richtungsändernd wirktn,
- und mit wenigstens einer Antriebseinrichtung (50), mit der Einfallswinkel (52) und/oder Einfallstelle (53) der Lichtsignale (20) auf den wenigstens einen Umlenkbereich (42a) eingestellt wird.
wobei der wenigstens eine Umlenkbereich (42a) wenigstens eine diffraktive Struktur aufweist,
**dadurch gekennzeichnet, dass**
der wenigstens eine Umlenkbereich (42a) auf der Lichtaustrittsseite eines Substrats (44) angeordnet ist, um die Lichtsignale (20) unmittelbar in den Überwachungsbereich (16) zu lenken.

2. Sendeeinrichtung nach Anspruch 1, **dadurch gekennzeichnet, dass** die wenigstens eine diffraktive Struktur (42a) als diffraktives optisches Element ausgestaltet ist.

3. Sendeeinrichtung nach Anspruch 1 oder 2, **dadurch gekennzeichnet, dass** der wenigstens eine Umlenkbereich (42a) für die Lichtsignale (20) durchlässig wirkt.

4. Sendeeinrichtung nach einem der vorigen Ansprüche, **dadurch gekennzeichnet, dass** der wenigstens eine Umlenkbereich (42a) in, an und/oder auf wenigstens einem für das Sendelicht durchlässigen Substrat (44) realisiert ist.

5. Sendeeinrichtung nach einem der vorigen Ansprüche, **dadurch gekennzeichnet, dass** der wenigstens eine Umlenkbereich (42a) auf der Lichteintrittsseite eines Substrats (44) angeordnet ist.

6. Sendeeinrichtung nach einem der vorigen Ansprüche, **dadurch gekennzeichnet, dass** die wenigstens eine Lichtsignalumlenkeinrichtung (34) wenigstens zwei Umlenkbereiche (42a) aufweist, die bezüglich des Strahlengangs der Lichtsignale (20) hintereinander angeordnet sind.

7. Sendeeinrichtung nach einem der vorigen Ansprüche, **dadurch gekennzeichnet, dass** eine richtungsändernde Eigenschaft des wenigstens einen Umlenkbereichs (42a-var) über seine Ausdehnung in wenigstens einer Ausdehnungsrichtung variiert und/oder die wenigstens eine Lichtsignalumlenkeinrichtung (34) wenigstens zwei Umlenkbereiche (42a) mit unterschiedlichen richtungsändernden Eigenschaften aufweist.

8. Sendeeinrichtung nach einem der vorigen Ansprüche, **dadurch gekennzeichnet, dass** die wenigstens eine Senderlichtquelle (30) und/oder der wenigstens eine Umlenkbereich (42a) der wenigstens einen Lichtsignalumlenkeinrichtung (34) mit wenigstens einer Antriebseinrichtung (50) bewegbar ist.

9. Sendeeinrichtung nach einem der vorigen Ansprüche, **dadurch gekennzeichnet, dass** der wenigstens eine Umlenkbereich (42a) drehbar und/oder schwenkbar und/oder verschiebbar angeordnet ist und/oder die wenigstens eine Senderlichtquelle (30) verschiebbar und/oder drehbar und/oder schwenkbar angeordnet ist.

10. Sendeeinrichtung nach einem der vorigen Ansprüche, **dadurch gekennzeichnet, dass** die wenigstens eine Senderlichtquelle (30) wenigstens einen Laser aufweist.

11. Sendeeinrichtung nach einem der vorigen Ansprüche, **dadurch gekennzeichnet, dass** die Sendeeinrichtung (24) wenigstens ein optisches System (32) aufweist, welches zwischen der wenigstens einen Senderlichtquelle (30) und dem wenigstens einen Umlenkbereich (42a) angeordnet ist.

12. Optische Messvorrichtung (12) zur Erfassung von Objekten (18) in einem Überwachungsbereich (16), mit
- wenigstens einer Sendeeinrichtung (24) zur Sendung von Lichtsignalen (20) in den Überwachungsbereich (16),
- wenigstens einer Empfangseinrichtung (26), mit der an etwa im Überwachungsbereich (16) vorhandenen Objekten (18) reflektierte Lichtsignale (22) empfangen werden können,
- und mit wenigstens einer Steuer- und Auswerteeinrichtung (28), mit der die wenigstens eine Sendeeinrichtung (24) und die wenigstens eine Empfangseinrichtung (26) gesteuert werden können und mit der empfangene Lichtsignale (22) ausgewertet werden können,
- wobei wenigstens eine Sendeeinrichtung (24) aufweist
- wenigstens eine Senderlichtquelle (30) zur Aussendung von Lichtsignalen (20),
- wenigstens eine Lichtsignalumlenkeinrichtung (34) zur Umlenkung der Lichtsignale (20) in den wenigstens einen Überwachungsbereich (16), wobei die wenigstens eine Lichtsignalumlenkeinrichtung (34) wenigstens einen Umlenkbereich (42a) aufweist, welcher auf die Lichtsignale (20) abhängig von einem Einfallswinkel (52) und oder/einer Einfallstelle (53) der Lichtsignale (20) richtungsändernd wirkt,
- und wenigstens eine Antriebseinrichtung (50), mit der Einfallswinkel (52) und/oder Einfallstelle (53) der Lichtsignale (20) auf den wenigstens einen Umlenkbereich (42a) eingestellt wird,
wobei wenigstens ein Umlenkbereich (42a) der wenigstens einen Sendeeinrichtung (24) wenigstens eine diffraktive Struktur aufweist,
**dadurch gekennzeichnet, dass**
wenigstens ein Umlenkbereich (42a) auf der Lichtaustrittsseite eines Substrats (44) angeordnet ist, um die Lichtsignale (20) unmittelbar in den Überwachungsbereich (16) zu lenken.

13. Verfahren zum Betreiben einer Sendeeinrichtung (24) einer optischen Messvorrichtung (12) zur Erfassung von Objekten (18) in einem Überwachungsbereich (16), bei dem mit wenigstens einer Senderlichtquelle (30) Lichtsignale (20) auf wenigstens einen Umlenkbereich (42a) wenigstens einer Lichtsignalumlenkeinrichtung (34) gesendet werden, mit dem wenigstens einen Umlenkbereich (42a) abhängig von einem Einfallswinkel (52) und/oder einer Einfallstelle (53) der Lichtsignale (20) eine Richtung der Lichtsignale (20) geändert und die Lichtsignale (20) in den Überwachungsbereich (16) gelenkt werden, wobei Einfallswinkel (52) und/oder Einfallstelle (53) der Lichtsignale (20) auf den wenigstens einen Umlenkbereich (42a) mit wenigstens einer Antriebseinrichtung (50) eingestellt wird, wobei die Richtung der Lichtsignale (20) mithilfe wenigstens einer diffraktiven Struktur des Umlenkbereichs (42a) eingestellt wird,
**dadurch gekennzeichnet, dass**
die Lichtsignale (20) mittels des wenigstens einen auf der Lichtaustrittsseite eines Substrats (44) angeordneten Umlenkbereichs (42a) unmittelbar in den Überwachungsbereich (16) gelenkt werden.

14. Verfahren nach Anspruch13, **dadurch gekennzeichnet, dass** der wenigstens eine Umlenkbereich (42a) und die wenigstens eine Senderlichtquelle (30) relativ zueinander bewegt werden, um den Einfallswinkel (52) und/oder die Einfallstelle (53) der Lichtsignale (20) auf den wenigstens einen Umlenkbereich (42a) zu verändern.

## Claims

1. Transmitting device (24) for an optical measuring device (12) for detecting objects (18) in a monitoring area (16), - with at least one transmitter light source (30) for emitting light signals (20), with at least one light signal deflection device (34) for deflecting the light signals (20) into at least one monitoring area (16) of the measuring device (12), wherein the at least one light signal deflection device (34) has at least one deflection area (42a), which acts on the light signals (20) to change direction depending on an angle of incidence (52) and/or a point of incidence (53) of the light signals (20), - and with at least one drive device (50), with which angle of incidence (52) and/or point of incidence (53) of the light signals (20) on the at least one deflection area (42a) is adjusted, wherein the at least one deflection area (42a) has at least one diffractive structure, **characterized in that** the at least one deflection area (42a) is arranged on the light exit side of a substrate (44) in order to direct the light signals (20) directly into the monitoring area (16).

2. Transmitting device according to claim 1, **characterized in that** the at least one diffractive structure (42a) is designed as a diffractive optical element.

3. Transmitting device according to claim 1 or 2, **characterized in that** the at least one deflection area (42a) acts transparently for the light signals (20).

4. Transmitting device according to one of the preceding claims, **characterized in that** the at least one deflection area (42a) is realized in, on and/or upon at least one substrate (44) that is transparent for the transmitted light.

5. Transmitting device according to one of the preceding claims, **characterized in that** the at least one deflection area (42a) is arranged on the light entry side of a substrate (44).

6. Transmitting device according to one of the preceding claims, **characterized in that** the at least one light signal deflection device (34) has at least two deflection areas (42a) that are arranged one behind the other with respect to the beam path of the light signals (20).

7. Transmitting device according to one of the preceding claims, **characterized in that** a direction-changing property of the at least one deflection area (42a-var) varies over its extent in at least one direction of extent and/or the at least one light signal deflection device (34) has at least two deflection areas (42a) with different direction-changing properties.

8. Transmitting device according to one of the preceding claims, **characterized in that** the at least one transmitter light source (30) and/or the at least one deflection area (42a) of the at least one light signal deflection device (34) is movable with at least one drive device (50).

9. Transmitting device according to one of the preceding claims, **characterized in that** the at least one deflection area (42a) is arranged to be rotatable and/or pivotable and/or displaceable and/or the at least one transmitter light source (30) is arranged to be displaceable and/or rotatable and/or pivotable.

10. Transmitting device according to one of the preceding claims, **characterized in that** the at least one transmitter light source (30) comprises at least one laser.

11. Transmitting device according to one of the preceding claims, **characterized in that** the transmitting device (24) has at least one optical system (32) which is arranged between the at least one transmitter light source (30) and the at least one deflection area (42a).

12. Optical measuring device (12) for detecting objects (18) in a monitoring area (16), with
- at least one transmitting device (24) for transmitting light signals (20) into the monitoring area (16), - at least one receiving device (26), with which light signals (22) reflected from objects (18) present in the monitoring area (16) can be received, - and with at least one control and evaluation device (28), with which the at least one transmitting device (24) and the at least one receiving device (26) can be controlled and with which received light signals (22) can be evaluated, wherein at least one transmitting device (24) comprises
- at least one transmitter light source (30) for emitting light signals (20),
- at least one light signal deflection device (34) for deflecting the light signals (20) into the at least one monitoring area (16), wherein the at least one light signal deflection device (34) has at least one deflection area (42a), which acts on the light signals (20) to change direction depending on an angle of incidence (52) and/or a point of incidence (53) of the light signals (20),
- and at least one drive device (50), with which angle of incidence (52) and/or point of incidence (53) of the light signals (20) on the at least one deflection area (42a) is adjusted, wherein at least one deflection area (42a) of the at least one transmitting device (24) has at least one diffractive structure, **characterized in that**
at least one deflection area (42a) is arranged on the light exit side of a substrate (44) in order to direct the light signals (20) directly into the monitoring area (16).

13. Method for operating a transmitting device (24) of an optical measuring device (12) for detecting objects (18) in a monitoring area (16), in which light signals (20) are sent with at least one transmitter light source (30) onto at least one deflection area (42a) of at least one light signal deflection device (34), with the at least one deflection area (42a) changing a direction of the light signals (20) depending on an angle of incidence (52) and/or a point of incidence (53) of the light signals (20) and directing the light signals (20) into the monitoring area (16), wherein angle of incidence (52) and/or point of incidence (53) of the light signals (20) on the at least one deflection area (42a) is adjusted with at least one drive device (50), wherein the direction of the light signals (20) is adjusted by means of at least one diffractive structure of the deflection area (42a), **characterized in that**
the light signals (20) are directed directly into the monitoring area (16) by means of the at least one deflection area (42a) arranged on the light exit side of a substrate (44).

14. Method according to claim 13, **characterized in that** the at least one deflection area (42a) and the at least one transmitter light source (30) are moved relative to each other in order to change the angle of incidence (52) and/or the point of incidence (53) of the light signals (20) on the at least one deflection area (42a).

## Revendications

1. Dispositif d'émission (24) pour un appareil de mesure optique (12) destiné à la détection d'objets (18) dans une zone de surveillance (16), - comprenant au moins une source de lumière émettrice (30) pour l'émission de signaux lumineux (20), au moins un dispositif de déviation de signaux lumineux (34) pour dévier les signaux lumineux (20) dans au moins une zone de surveillance (16) de l'appareil de mesure (12), dans lequel le au moins un dispositif de déviation de signaux lumineux (34) présente au moins une zone de déviation (42a) qui agit en changeant la direction des signaux lumineux (20) en fonction d'un angle d'incidence (52) et/ou d'un point d'incidence (53) des signaux lumineux (20), - et au moins un dispositif d'entraînement (50), avec lequel l'angle d'incidence (52) et/ou le point d'incidence (53) des signaux lumineux (20) sur la au moins une zone de déviation (42a) est réglé, dans lequel la au moins une zone de déviation (42a) présente au moins une structure diffractive, **caractérisé en ce que** la au moins une zone de déviation (42a) est disposée sur le côté de sortie de lumière d'un substrat (44) pour diriger les signaux lumineux (20) directement dans la zone de surveillance (16).

2. Dispositif d'émission selon la revendication 1, **caractérisé en ce que** la au moins une structure diffractive (42a) est conçue comme un élément optique diffractif.

3. Dispositif d'émission selon la revendication 1 ou 2, **caractérisé en ce que** la au moins une zone de déviation (42a) agit de manière transparente pour les signaux lumineux (20).

4. Dispositif d'émission selon l'une des revendications précédentes, **caractérisé en ce que** la au moins une zone de déviation (42a) est réalisée dans, sur et/ou sur au moins un substrat (44) transparent à la lumière émise.

5. Dispositif d'émission selon l'une des revendications précédentes, **caractérisé en ce que** la au moins une zone de déviation (42a) est disposée sur le côté d'entrée de lumière d'un substrat (44).

6. Dispositif d'émission selon l'une des revendications précédentes, **caractérisé en ce que** le au moins un dispositif de déviation de signaux lumineux (34) présente au moins deux zones de déviation (42a) qui sont disposées l'une derrière l'autre par rapport au trajet des rayons des signaux lumineux (20).

7. Dispositif d'émission selon l'une des revendications précédentes, **caractérisé en ce qu'**une propriété de changement de direction de la au moins une zone de déviation (42a-var) varie sur son étendue dans au moins une direction d'extension et/ou le au moins un dispositif de déviation de signaux lumineux (34) présente au moins deux zones de déviation (42a) avec différentes propriétés de changement de direction.

8. Dispositif d'émission selon l'une des revendications précédentes, **caractérisé en ce que** la au moins une source de lumière émettrice (30) et/ou la au moins une zone de déviation (42a) du au moins un dispositif de déviation de signaux lumineux (34) est mobile avec au moins un dispositif d'entraînement (50).

9. Dispositif d'émission selon l'une des revendications précédentes, **caractérisé en ce que** la au moins une zone de déviation (42a) est disposée de manière rotative et/ou pivotante et/ou coulissante et/ou la au moins une source de lumière émettrice (30) est disposée de manière coulissante et/ou rotative et/ou pivotante.

10. Dispositif d'émission selon l'une des revendications précédentes, **caractérisé en ce que** la au moins une source de lumière émettrice (30) comprend au moins un laser.

11. Dispositif d'émission selon l'une des revendications précédentes, **caractérisé en ce que** le dispositif d'émission (24) comprend au moins un système optique (32) qui est disposé entre la au moins une source de lumière émettrice (30) et la au moins une zone de déviation (42a).

12. Appareil de mesure optique (12) pour la détection d'objets (18) dans une zone de surveillance (16), comprenant - au moins un dispositif d'émission (24) pour l'émission de signaux lumineux (20) dans la zone de surveillance (16), - au moins un dispositif de réception (26), avec lequel les signaux lumineux (22) réfléchis par des objets (18) présents approximativement dans la zone de surveillance (16) peuvent être reçus, - et au moins un dispositif de commande et d'évaluation (28), avec lequel le au moins un dispositif d'émission (24) et le au moins un dispositif de réception (26) peuvent être commandés et avec lequel les signaux lumineux reçus (22) peuvent être évalués, dans lequel au moins un dispositif d'émission (24) comprend
- au moins une source de lumière émettrice (30) pour l'émission de signaux lumineux (20),
- au moins un dispositif de déviation de signaux lumineux (34) pour dévier les signaux lumineux (20) dans la au moins une zone de surveillance (16), dans lequel le au moins un dispositif de déviation de signaux lumineux (34) présente au moins une zone de déviation (42a) qui agit en changeant la direction des signaux lumineux (20) en fonction d'un angle d'incidence (52) et/ou d'un point d'incidence (53) des signaux lumineux (20),
- et au moins un dispositif d'entraînement (50), avec lequel l'angle d'incidence (52) et/ou le point d'incidence (53) des signaux lumineux (20) sur la au moins une zone de déviation (42a) est réglé, dans lequel au moins une zone de déviation (42a) du au moins un dispositif d'émission (24) présente au moins une structure diffractive, **caractérisé en ce que**
au moins une zone de déviation (42a) est disposée sur le côté de sortie de lumière d'un substrat (44) pour diriger les signaux lumineux (20) directement dans la zone de surveillance (16).

13. Procédé pour faire fonctionner un dispositif d'émission (24) d'un appareil de mesure optique (12) pour la détection d'objets (18) dans une zone de surveillance (16), dans lequel des signaux lumineux (20) sont envoyés avec au moins une source de lumière émettrice (30) sur au moins une zone de déviation (42a) d'au moins un dispositif de déviation de signaux lumineux (34), avec la au moins une zone de déviation (42a), une direction des signaux lumineux (20) est modifiée en fonction d'un angle d'incidence (52) et/ou d'un point d'incidence (53) des signaux lumineux (20) et les signaux lumineux (20) sont dirigés dans la zone de surveillance (16), dans lequel l'angle d'incidence (52) et/ou le point d'incidence (53) des signaux lumineux (20) sur la au moins une zone de déviation (42a) est réglé avec au moins un dispositif d'entraînement (50), dans lequel la direction des signaux lumineux (20) est réglée à l'aide d'au moins une structure diffractive de la zone de déviation (42a), **caractérisé en ce que** les signaux lumineux (20) sont dirigés directement dans la zone de surveillance (16) au moyen de la au moins une zone de déviation (42a) disposée sur le côté de sortie de lumière d'un substrat (44).

14. Procédé selon la revendication 13, **caractérisé en ce que** la au moins une zone de déviation (42a) et la au moins une source de lumière émettrice (30) sont déplacées l'une par rapport à l'autre pour modifier l'angle d'incidence (52) et/ou le point d'incidence (53) des signaux lumineux (20) sur la au moins une zone de déviation (42a).
